# EUROPÄISCHE PATENTSCHRIFT

(11) **EP 1 176 343 B1**
(45) Veröffentlichungstag und Bekanntmachung des Hinweises auf die Patenterteilung: **01.02.2006**
(21) Anmeldenummer: 01115957.1
(22) Anmeldetag: 29.06.2001
(51) Int. Cl.: F16J 15/08

(54) **Dichtung zwischen statischen Turbinenteilen**
Sealing between static turbine components
Joint d'étanchéité entre éléments statiques d'une turbine

(30) Priorität: 28.07.2000 US 628328
(43) Veröffentlichungstag der Anmeldung: 30.01.2002
(73) Patentinhaber: Alstom Technology Ltd, 5400 Baden (CH)
(72) Erfinder: McLean, Howard Jones, North Palm Beach, Florida 33408 (US)

(56) Entgegenhaltungen:
- DE-A- 2 918 996
- US-A- 3 975 114
- US-A- 5 125 796
- US-A- 5 127 799
- US-A- 5 865 600
- PATENT ABSTRACTS OF JAPAN Bd. 0071, Nr. 12 (M-215), 17. Mai 1983 (1983-05-17) & JP 58 032906 A (KOGYO GIJUTSUIN; others: 0J), 26. Februar 1983 (1983-02-26)

## Beschreibung

### Technisches Gebiet

Die Erfindung betrifft eine Dichtung zwischen statischen Teilen einer Turbine. Sie betrifft insbesondere eine Dichtung, die aus einem flachen Metallstück besteht, das an zwei entgegengesetzten Seiten je eine Ausbuchtung aufweist, die eng anliegend in Nuten in den statischen Teilen angeordnet sind. Eine derartige Dichtung ist aus der Druckschrift US-A-3 975 114 bekannt.

### Stand der Technik

Solche Dichtungen werden vor allem in Gasturbinen angewendet. Sie dienen der Abdichtung zwischen statischen Teilen der Turbine, beispielsweise von Kühlluftpfaden in Leitschaufeln, zwischen den einzelnen Segmenten einer Leitschaufelreihe oder als Umfangsdichtung zwischen einem Gehäuseteil der Turbine und einer Leitschaufelreihe.
Diese Art Dichtung ist zum Beispiel in der US 5,743,708 beschrieben und dort insbesondere in den Figuren 17 und 18 gezeigt. Die Dichtung besteht dort aus einem flachen Metallstück, das an zwei entgegengesetzten Seiten je eine solide Ausbuchtung aufweist. Im Querschnitt betrachtet besitzt die Dichtung ein langes schmales Mittelstück, das an seinen Enden je die runde Ausbuchtung aufweist. Aufgrund ihrer Querschnittsform wird sie als sogenannter "dog bone seal" bezeichnet. Sie ist dort bei der ersten Leitschaufelreihe jeweils zwischen benachbarten Leitschaufel-Plattformen angeordnet und dient dort der Abdichtung von Kühlluftpfaden zwecks Kühlung der äusseren und inneren Plattformen der Leitschaufeln.

Die soliden, runden Ausbuchtungen sind jeweils in einer Nut von benachbarten Leitschaufel-Plattformen angeordnet, wobei sie den Innenflächen der Nuten eng anliegen. Die Dichtungen erstrecken sich jeweils über die Seitenlänge einer Plattform. Die Dichtung wird hauptsächlich durch eine Druckdifferenz erwirkt, wobei sich die Dichtung entlang Linien an den Seitenflächen der Nuten ergibt, wo die gerundeten Ausbuchtungen die flachen Innenseiten der Nuten berühren. Dabei muss eine Dichtung durch die Ausbuchtungen in beiden Nuten gewährleistet sein.
Eine Variante dieser Art Dichtung, eines sogenannten "dog bone seals", ist in der US-5,868,398 offenbart. Sie dient auch hier der Dichtung zwischen benachbarten Leitschaufelsegmenten. Die Ausbuchtung an den Seiten der Dichtung ist jedoch nicht solid ausgebildet, sondem durch eine Krümmung des flachen Metallstückes realisiert, wobei die gekrümmten Teile in einer Nut eingesetzt sind.

Eine weitere Variante dieser Dichtung ist eine Umfangsdichtung zum Beispiel zur Dichtung zwischen der Rotorabdeckung der Turbine und ersten Leitschaufelreihe zwecks Dichtung von Kühlluft gegen Heissgas.
Bei dieser Dichtung besitzt das flache Metallstück die Form eines Ringes, der an seiner radial inneren sowie radial äusseren Seite eine Ausbuchtung aufweist. An den statischen Teilen befindet sich je eine Nut, in denen die Ausbuchtungen angeordnet sind. Der Metallring dieser Dichtungen besteht aus mindestens zwei Teilen, zum Beispiel zwei 180°-grädigen Teilen, welche gegen den unteren bzw. den oberen Halbteil der Turbine abdichten. Die Ausbuchtungen berühren die Innenflächen der Nuten entlang einer Bogenlinie über 180°.

Diese Dichtungen haben den Nachteil, dass im Fall einer ungenügenden Druckdifferenz die Ausbuchtungen nicht genügend eng anliegen und eine Undichtheit entsteht. Weiter ist die Dichtung nicht voll gewährleistet, wenn eines oder beide der statischen Teile der Turbine sich axial verschieben und die Nuten sich relativ zueinander verlagern. In dem Fall bildet sich zwischen einer Nut und der darin liegenden Ausbuchtung entlang jeder der beiden 180°-Segmente ein lippen-förmiger Zwischenraum, wodurch eine Undichtheit entsteht.

Um solche Undichtheiten aufgrund einer relativen Verlagerung der Nuten zu vermeiden, können zum Beispiel die Dichtungen in mehreren kürzeren Ringsegmenten realisiert werden. In diesem Fall ist die Berührungslinie zwischen Ausbuchtungen und Nutflächen jeweils eine nahezu gerade Linie anstelle einer gekrümmten Linie. Es ist dann ermöglicht, dass die Dichtung in den Nuten hin- und herwiegen kann und bei einer Verlagerung der Nuten die Dichtung sich mitbewegen kann, wobei eine Berührung entlang der geraden Linie und somit die Dichtung weiterhin besteht. Bei dieser Variante können jedoch Undichtheiten an den Fügestellen zwischen den einzelnen Ringsegmenten entstehen, sodass gesamthaft keine Verbesserung der Dichtung erreicht wird.

### Darstellung der Erfindung

In Anbetracht der aufgeführten Nachteile der eingangs beschriebenen Dichtung liegt der Erfindung die Aufgabe zugrunde, eine Dichtung dieser Art zwischen statischen Teilen einer Turbine zu schaffen, die jederzeit eine genügende Dichtung gewährleistet, die nicht ausschliesslich auf einer Druckdifferenz beruht und die bei einer relativen Verschiebung der statischen Teile ihre dichtende Wirkung beibehält.

Diese Aufgabe ist durch eine Dichtung mit den Merkmalen gemäss Anspruch 1 gelöst.

Eine Dichtung zwischen statischen Teilen einer Turbine weist ein erstes Trägerstück aus einem flachen Metallstück auf mit einem Mittelteil und zwei Endteilen, wobei die Endteile an gegenüberliegenden Seiten des Trägerstücks angeordnet sind und sich jeweils über die gesamte Seitenlänge erstrecken. Das Trägerstück erstreckt sich über den zu dichtenden Raum zwischen den statischen Teilen der Turbine, wobei die Endteile jeweils in Nuten in den statischen Teilen angeordnet sind. Erfindungsgemäss weist die Dichtung einen zweiten Teil aus einem flachen Metallstück auf, der parallel zum Trägerstück angeordnet und am Trägerstück befestigt ist. Er weist ebenfalls einen Mittelteil und zwei Endteile auf, wobei seine Endteile ebenfalls in den Nuten an den statischen Turbinenteilen angeordnet sind. Dabei ist in jeder Nut mindestens ein Endteil federnd ausgebildet, jener des Trägerstücks oder jener des zweiten Teils oder beide Endteile. Die federnd ausgebildeten Endteile sind jeweils in den Nuten in einem Presssitz angeordnet.

Die federnde Eigenschaft der Endteile bewirkt, dass sie an den Flächen der Nuten in einem Presssitz eng anliegen, wodurch eine Dichtung entlang den Berührungslinien zwischen Endteilen und Nuten entsteht. Die pressende Berührung und Dichtung sind von einer Druckdifferenz weitgehend unabhängig. Ferner bewirkt die federnde Eigenschaft, dass bei einer Verlagerung der Nuten relativ zueinander die Endteile weiterhin in einem Presssitz entlang Berührungslinien den Nutflächen anliegen. Dadurch bildet sich zwischen Nuten und Endteilen keine Zwischenräume und eine Dichtung ist auch im Falle einer Verschiebung der statischen Teile gesichert.

In einer ersten Ausführung der erfindungsgemässen Dichtung sind die Endteile sowohl des Trägerstücks als auch die Endteile des zweiten Teils jeweils gerundet und hakenförmig ausgebildet, wobei die Innenseite der Hakenform der Endteile am Trägerstück jeweils zum zweiten Teil gewandt sind und die Innenseite der Krümmung der Hakenform der Endteile des zweiten Teils jeweils zum Trägerstück gewandt sind. Die Haken der Endteile der beiden Teile verlaufen also zueinander. Sie besitzen dabei eine Länge derart, dass sie ineinander verlaufen.

In einer bevorzugten Ausführung ist das flache Metallstück des zweiten Teils dünner ausgebildet als jenes des Trägerstücks. Dadurch ist die federnde Wirkung der Endteile des zweiten Teils erhöht. Je nach Anwendung und Ausmass der erwarteten relativen Verlagerung der Nuten kann die Dicke des Metallstücks für den zweiten Teil so gewählt werden, dass die notwendige federnde Wirkung erreicht wird.

Ein Trägerstück besteht in dieser ersten Ausführung aus zwei Ringsegmenten von je 180°. Der zweite Teil besteht jeweils aus mehreren kurzen Ringsegmenten, die entlang dem Trägerstück befestigt sind.
In einer Variante besteht der zweite Teil ebenfalls aus zwei Ringsegmenten von je 180°.
In einer weiteren Variante besteht das Trägerstück sowie der zweite Teil aus mehreren kurzen Ringsegmenten.

In einer weiteren bevorzugten Ausführung ist der zweite Teil am Trägerstück leicht versetzt befestigt, sodass er über den Rand des Trägerstücks hinausragt und das benachbarte Trägerstück bei der Fügestelle zwischen den Ringsegmenten überlappt. Dadurch wird eine Undichtheit an den Fügestellen vermieden.

In einer Variante dieser Ausführung sind die Ringsegmente der Dichtung von der Umfangslänge einer einzelnen Leitschaufelplattform, wie zum Beispiel in ihrer Anwendung zur Dichtung des Raumes zwischen Leitschaufel-Plattformen und dem Innengehäuse. Bei kurzen Segmenten sind die Berührungslinien zwischen Endteilen und Nuten gerade. Hierdurch wird ermöglicht, dass die Dichtungsringsegmente bei einer relativen Verschiebung der Nuten in diesen hin und her wiegen können und eine Berührung und Dichtung aufrechterhalten bleibt. Um eine Dichtung zwischen den einzelnen Ringsegmenten zu erreichen, sind die Trägerstücke hier so ausgebildet, dass sie an den Fügestellen einander überlappen.

In einer zweiten Ausführung der Erfindung besteht das Trägerstück aus einer Dichtung mit einem Mittelteil und Endteilen, wobei die Endteile solide Ausbuchtungen sind. Der zweite Teil dieser Dichtung besteht aus einem flachen Metallstück, dass an seinen Seiten Endteile aufweist, die federnd ausgebildet sind. Die federnden Endteile sind jeweils spitzdachförmig ausgebildet. Die Spitze dieser Endteile berührt jeweils die Innenflächen der Nuten, wobei die Dichtung gebildet wird. In einer Variante sind die federnden Endteile auch hier hakenförmig ausgebildet. Je nach Ausmass der Verlagerung der Nuten sowie auch der Beschaffenheit der Nuten sind auch hier die Grösse der Segmente des Trägerstücks sowie des zweiten Teils der Dichtung entsprechend gewählt.

### Kurze Beschreibung der Zeichnungen

Es zeigen:
Figur 1 einen Querschnitt durch eine erfindungsgemässe Dichtung der ersten Ausführung mit einem Trägerstück und einem zweiten Teil, wobei die Endteile des Trägerstücks und des zweiten Teils die Form von ineinander verlaufenden Haken aufweisen,
Figur 2 einen Querschnitt durch eine erfindungsgemässe Dichtung der zweiten Ausführung mit soliden Ausbuchtungen am Trägerstück und spitzdachförmigen Endteilen am zweiten Teil der Dichtung,

### Weg der Ausführung der Erfindung

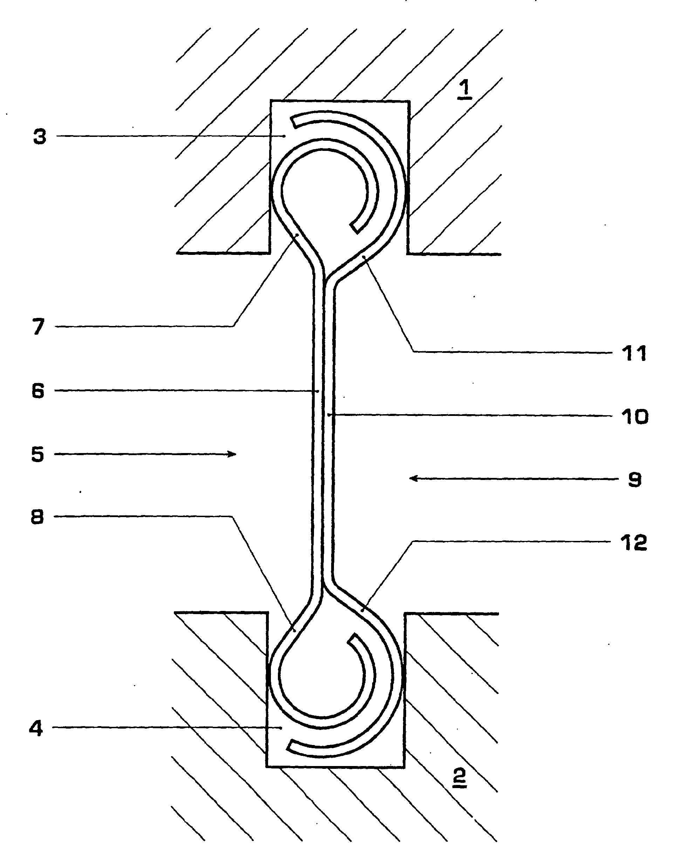

Figur 1 zeigt die erste Ausführung der erfindungsgemässen Dichtung. Sie findet zum Beispiel Anwendung in einer Gasturbine zwischen Innengehäuse und der ersten Leitschaufelreihe.
Sie ist auch an anderen Orten einer Gasturbine anwendbar, wo gleichzeitig Teile bei radialem und axialem Versatz abgedichtet werden müssen.
In der Figur sind zwei statische Teile 1 und 2 einer Turbine gezeigt, die sich beispielsweise über die obere Hälfte bzw. die untere Hälfte der Turbine erstrecken. Beide Teile weisen Umfangsnuten 3 bzw. 4 auf, in denen die erfindungsgemässe Dichtung angeordnet ist. Die Dichtung weist ein Trägerstück 5 auf, das aus einem flachen Metallstück in der Form von zwei Ringsegmenten von je 180° besteht. Der Mittelteil 6 des Trägerstücks erstreckt sich radial über den abzudichtenden Raum zwischen den beiden statischen Teilen 1 und 2. Der Mittelteil 6 beider Ringsegmente besitzt an seiner radial inneren sowie radial äusseren Seite Endteile 7 und 8, mit einer runden, federnden Hakenform.
Ein zweiter Teil 9 der Dichtung ist mit dem Trägerstück 5 verbunden. Dieser ist im Bereich seines Mittelteils 10 durch Nieten oder Schweissen am Mittelteil 6 des Trägerstücks 5 befestigt. Der zweite Teil 9 weist grundsätzlich die gleiche Form wie das Trägerstück 5 auf. Er besteht ebenfalls aus einem flachen Metallstück, das beispielsweise ebenfalls aus zwei Ringsegmenten zu je 180° besteht.
An seinen radial inneren sowie radial äusseren Seiten der Ringsegmente weist der zweite Teil ebenfalls Endteile 11 und 12 auf mit einer runden, federnden Hakenform. Die Innenseite der Hakenform des Trägerstücks 5 und jene des zweiten Teils 9 sind einander zugewandt. Die Endteile 7, 8,11,12 verlaufen dabei ineinander und überlappen einander zumindest teilweise.
Die hakenförmigen Endteile 7,8,11, 12 ermöglichen dank ihrer federnden Eigenschaft in den Nuten einen Presssitz, durch den eine dichtende Berührung zwischen Endteilen und Nutflächen auch ohne Druckdifferenz gewährleistet ist.

Die Dicke des Metallstücks für den zweiten Teil ist hier gleich wie jene für das Trägerstück. Die Dicke kann jedoch auch kleiner gewählt werden, um eine grössere Federwirkung zu erreichen. Diese ist im Fall von grösseren relativen Verlagerungen der Nuten erwünscht, um möglichst die Bildung von Zwischenräumen in den Nuten zu vermeiden.
Durch den Einsatz der federnden Endteile ist eine Dichtung auch im Fall von Verlagerungen der Nuten gewährleistet. Sind die Verlagerungen jedoch sehr gross oder sind die Innenflächen der Nuten unregelmässig wie zum Beispiel in der Anwendung der Dichtung bei Leitschaufel-Plattformen wird eine zuverlässige Dichtung durch eine stärkere Segmentierung beider Teile erreicht. Es kann entweder nur der zweite Teil oder auch beide Teile, Trägerstück sowie zweiter Teil, in kürzeren Ringsegmenten realisiert werden. Die Berührungslinien an den Nutflächen sind dann gerade Linien und die Dichtung kann innerhalb der Nuten hin- und herwiegen und mit der Verlagerung der Nuten sich mitbewegen.

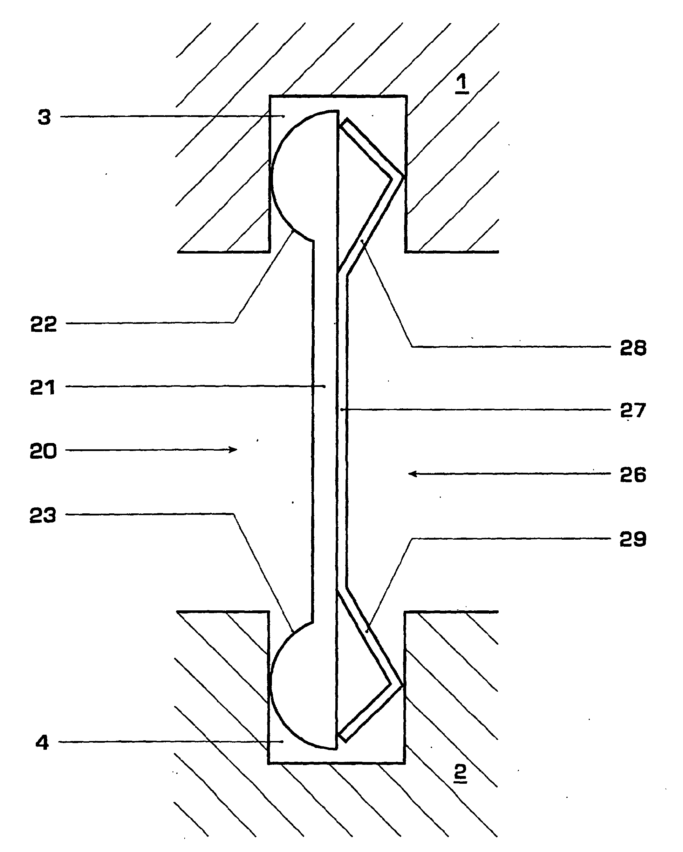

Bei sehr grossen relativen Verlagerungen oder ist das Ausmass der Verlagerungen unbekannt eignet sich eine erfindungsgemässe Dichtung wie in Figur 2 gezeigt. Das Trägerstück 20 besteht wiederum aus einem flachen Metallstück mit einem Mittelteil 21 und zwei Endteilen 22 und 23, die in den Nuten 3 und 4 angeordnet sind. Die Endteile 22 und 23 sind hier jenen von bekannten "dog bone seals" ähnlich, indem sie solid sind. Sie sind hier beispielsweise halbrund.
Im Bereich des Mittelteils 21 des Trägerstücks 20 ist ein zweiter Teil 26 aus einem flachen Metallstück befestigt. Dessen Mittelteil 27 verläuft parallel zum Mittelteil des Trägerstücks. Seine Endteile 28 und 29 sind hier in der Form eines Spitzdachs, das federnd den Innenflächen der Nuten 3 und 4 anliegt. Um Undichtheiten bei den Fügestellen zwischen den einzelnen Ringsegmenten der Dichtung zu vermeiden, sind beispielsweise die Trägerstücke so ausgebildet, dass sie an den Fügestellen einander überlappen. In einer Variante sind die zweiten Teile jeweils bezüglich der Trägerstücke versetzt befestigt, sodass durch sie eine Überlappung erreicht wird.

### Bezugszeichenliste

- 1: statisches Turbinenteil
- 2: statisches Turbinenteil
- 3: Umfangsnut
- 4: Umfangsnut
- 5: Trägerstück
- 6: Mittelteil des Trägerstücks
- 7: Endteil des Trägerstücks
- 8: Endteil des Trägerstücks
- 9: Zweiter Teil der Dichtung
- 10: Mittelteil des zweiten Teils
- 11: Endteil des zweiten Teils
- 12: Endteil des zweiten Teils

- 20: Trägerstück
- 21: Mittelteil
- 22: Endteil
- 23: Endteil
- 26: zweiter Teil
- 27: Mittelteil
- 28: Endteil
- 29: Endteil

## Patentansprüche

1. Dichtung zwischen statischen Teilen (1, 2) einer Turbine mit einem Trägerstück (5, 20) bestehend aus einem flachen Metallstück, das ein Mittelteil (6, 21) und an entgegengesetzten Seiten des Mittelteils (6, 21) je ein Endteil (7,8, 22, 23) aufweist, wobei die Endteile (7,8, 22, 23) jeweils in einer Nut (3, 4) in den statischen Turbinenteilen (1, 2) angeordnet sind und dort den Innenflächen der Nuten (3, 4) anliegen
**dadurch gekennzeichnet, dass**
die Dichtung einen zweiten Teil (9, 26) aufweist, der aus einem flachen Metallstück besteht mit einem Mittelteil (10, 27) und an entgegengesetzten Seiten seines Mittelteils (10, 27) je einem Endteil (11, 12, 28, 29),
wobei der Mittelteil (10, 27) des zweiten Teils (9, 26) parallel zum Mittelteil (6, 21) des Trägerstücks (5, 20) am Trägerstück (5, 20) befestigt ist
und die Endteile (11, 12, 28, 29) des zweiten Teils (9, 26) in den Nuten (3, 4) der statischen Turbinenteile (1, 2) angeordnet sind,
und in jeder Nut (3, 4) mindestens einer der Endteile (7,8, 22, 23, 11, 12, 28, 29) federnd ausgebildet ist und einer Innenfläche der Nut (3, 4) in einem Presssitz anliegt.

2. Dichtung nach Anspruch 1
**dadurch gekennzeichnet, dass**
die Endteile (7,8) des Trägerstücks (5, 20) und die Endteile (11, 12, 28, 29) des zweiten Teils (9, 26) federnd ausgebildet sind und die Endteile (7, 8) des Trägerstücks (5, 20) und die Endteile (11, 12) des zweiten Teils (9) gekrümmt und hakenförmig ausgebildet sind, wobei die Hakenform gerundet ist und die Innenseiten der gerundeten Hakenform der Endteile (7,8) des Trägerstücks (5) den Innenseiten der gerundeten Hakenform der Endteile (11, 12) des zweiten Teils (9) zugewandt sind.

3. Dichtung nach Anspruch 1
**dadurch gekennzeichnet, dass**
die Endteile (22, 23) des Trägerstücks (20) je solid ausgebildet sind und die Endteile (11, 12, 28, 29) des zweiten Teils (9, 26) federnd ausgebildet sind.

4. Dichtung nach Anspruch 3
**dadurch gekennzeichnet, dass**
die Endteile (11, 12, 28, 29) des zweiten Teils (9, 26) spitzdachförmig oder hakenförmig ausgebildet sind.

5. Dichtung nach einem der Ansprüche 1 bis 4
**dadurch gekennzeichnet, dass**
das Trägerstück (5, 20) der Dichtung aus zwei Ringsegmenten von je 180° und der zweite Teil (9, 26) aus mehreren Ringsegmenten kleiner 180° bestehen.

6. Dichtung nach einem der Ansprüche 1 bis 4
**dadurch gekennzeichnet, dass**
das Trägerstück (5, 20) und der zweite Teil (9, 26) der Dichtung je aus zwei Ringsegmenten von je 180° bestehen.

7. Dichtung nach einem der Ansprüche 1 bis 4
**dadurch gekennzeichnet, dass**
das Trägerstück (5, 20) und der zweite Teil (9, 26) der Dichtung je aus mehreren Ringsegmenten kleiner 180° bestehen.

8. Dichtung nach einem der vorangehenden Ansprüche
**dadurch gekennzeichnet, dass**
die Dicke des flachen Metallstückes des zweiten Teils (9, 26) kleiner ist als jene des flachen Metallstücks des Trägerstücks (5, 20).

9. Dichtung nach einem der Ansprüche 5-8
**dadurch gekennzeichnet, dass**
an den Fügestellen zwischen den einzelnen Ringsegmenten die Ringsegmente des Trägerstücks (5, 20) einander jeweils überlappen oder die zweiten Teile (9, 26) an den Trägerstücken (5, 20) versetzt befestigt sind, sodass sie die Trägerstücke (5, 20) an den Fügestellen überlappen.

## Claims

1. Seal between static components (1, 2) of a turbine, having a support piece (5, 20) consisting of a flat metal piece which has a centre part (6, 21) and a respective end part (7, 8, 22, 23) on opposite sides of the centre part (6, 21), the end parts (7, 8, 22, 23) being arranged in a respective slot (3, 4) in the static turbine components (1, 2) and bearing there against the inner surfaces of the slots (3, 4), **characterized in that** the seal has a second part (9, 26) which consists of a flat metal piece having a centre part (10, 27) and a respective end part (11, 12, 28, 29) on opposite sides of its centre part (10, 27), the centre part (10, 27) of the second part (9, 26) being fastened to the support piece (5, 20) parallel to the centre part (6, 21) of the latter, and the end parts (11, 12, 28, 29) of the second part (9, 26) being arranged in the slots (3, 4) of the static turbine components (1, 2), and at least one of the end parts (7, 8, 22, 23, 11, 12, 28, 29) being designed to be elastic in each slot (3, 4) and bearing against an inner surface of the slot (3, 4) in an interference fit.

2. Seal according to Claim 1, **characterized in that** the end parts (7, 8) of the support piece (5, 20) and the end parts (11, 12, 28, 29) of the second part (9, 26) are of elastic design, and the end parts (7, 8) of the support piece (5, 20) and the end parts (11, 12) of the second part (9) are of curved and hook-shaped design, the hook shape being rounded, and the insides of the rounded hook shape of the end parts (7, 8) of the support piece (5) being turned towards the insides of the rounded hook shape of the end parts (11, 12) of the second part (9).

3. Seal according to Claim 1, **characterized in that** the end parts (22, 23) of the support piece (20) are each of solid design and the end parts (11, 12, 28, 29) of the second part (9, 26) are of elastic design.

4. Seal according to Claim 3, **characterized in that** the end parts (11, 12, 28, 29) of the second part (9, 26) are of pointed-roof-shaped or hook-shaped design.

5. Seal according to one of Claims 1 to 4, **characterized in that** the support piece (5, 20) of the seal consists of two annular segments of 180° each, and the second part (9, 26) consists of a plurality of annular segments of less than 180°.

6. Seal according to one of Claims 1 to 4, **characterized in that** the support piece (5, 20) and the second part (9, 26) of the seal each consist of two annular segments of 180° each.

7. Seal according to one of Claims 1 to 4, **characterized in that** the support piece (5, 20) and the second part (9, 26) of the seal each consist of a plurality of annular segments of less than 180°.

8. Seal according to one of the preceding claims, **characterized in that** the thickness of the flat metal piece of the second part (9, 26) is less than that of the flat metal piece of the support piece (5, 20).

9. Seal according to one of Claims 5 to 8, **characterized in that**, at the joints between the individual annular segments, the annular segments of the support piece (5, 20) overlap one another in each case or the second parts (9, 26) are fastened to the support pieces (5, 20) in an offset manner, so that the support pieces (5, 20) overlap at the joints.

## Revendications

1. Joint d'étanchéité entre parties statiques (1, 2) d'une turbine, comprenant un organe de support (5, 20) constitué d'un organe en métal plat qui présente une partie centrale (6, 21) et sur des côtés opposés de la partie centrale (6, 21), une partie d'extrémité respective (7, 8, 22, 23), les parties d'extrémité (7, 8, 22, 23) étant disposées à chaque fois dans une rainure (3, 4) dans les parties statiques (1, 2) de la turbine et s'appliquant contre les surfaces internes des rainures (3, 4),
**caractérisé en ce que**
le joint d'étanchéité présente une deuxième partie (9, 26) qui se compose d'un organe métallique plat avec une partie centrale (10, 27) et sur des côtés opposés de sa partie centrale (10, 27), une partie d'extrémité respective (11, 12, 28, 29),
la partie centrale (10, 27) de la deuxième partie (9, 26) étant fixée parallèlement à la partie centrale (6, 21) de l'organe de support (5, 20) sur l'organe de support (5, 20) et les parties d'extrémité (11, 12, 28, 29) de la deuxième partie (9, 26) étant disposées dans les rainures (3, 4) des parties statiques (1, 2) de la turbine, et dans chaque rainure (3, 4) au moins l'une des parties d'extrémité (7, 8, 22, 23, 11, 12, 28, 29) étant réalisée de manière élastique et s'appliquant par ajustement serré contre une surface intérieure de la rainure (3, 4).

2. Joint d'étanchéité selon la revendication 1,
**caractérisé en ce que**
les parties d'extrémité (7, 8) de l'organe de support (5, 20) et les parties d'extrémité (11, 12, 28, 29) de la deuxième partie (9, 26) sont réalisées de manière élastique et les parties d'extrémité (7, 8) de l'organe de support (5, 20) et les parties d'extrémité (11, 12) de la deuxième partie (9) étant réalisées sous forme courbée et en crochet, la forme en crochet étant arrondie et les côtés intérieurs de la forme en crochet arrondie des parties d'extrémité (7, 8) de l'organe de support (5) étant tournés vers les côtés intérieurs de la forme en crochet arrondie des parties d'extrémité (11, 12) de la deuxième partie (9).

3. Joint d'étanchéité selon la revendication 1,
**caractérisé en ce que**
les parties d'extrémité (22, 23) de l'organe de support (20) sont réalisées sous forme solide dans chaque cas et les parties d'extrémité (11, 12, 28, 29) de la deuxième partie (9, 26) sont réalisées sous forme élastique.

4. Joint d'étanchéité selon la revendication 3,
**caractérisé en ce que**
les parties d'extrémité (11, 12, 28, 29) de la deuxième partie (9, 26) sont réalisées en forme de toit pointu ou en forme de crochet.

5. Joint d'étanchéité selon l'une quelconque des revendications 1 à 4,
**caractérisé en ce que**
l'organe de support (5, 20) du joint d'étanchéité se compose de deux segments annulaires de 180° chacun et la deuxième partie (9, 26) se compose de plusieurs segments annulaires inférieurs à 180°.

6. Joint d'étanchéité selon l'une quelconque des revendications 1 à 4,
**caractérisé en ce que**
l'organe de support (5, 20) et la deuxième partie (9, 26) du joint d'étanchéité se composent chacun de deux segments annulaires de 180° chacun.

7. Joint d'étanchéité selon l'une quelconque des revendications 1 à 4,
**caractérisé en ce que**
l'organe de support (5, 20) et la deuxième partie (9, 26) du joint d'étanchéité se composent chacun de plusieurs segments annulaires inférieurs à 180°.

8. Joint d'étanchéité selon l'une quelconque des revendications précédentes,
**caractérisé en ce que**
l'épaisseur de l'organe métallique plat de la deuxième partie (9, 26) est inférieure à celle de l'organe métallique plat de l'organe de support (5, 20).

9. Joint d'étanchéité selon l'une quelconque des revendications 5 à 8,
**caractérisé en ce que**,
au niveau des points d'assemblage entre les différents segments annulaires, les segments annulaires de l'organe de support (5, 20) se chevauchent mutuellement ou les deuxièmes parties (9, 26) sont fixées de manière décalée sur les organes de support (5, 20) de telle sorte qu'elles chevauchent les organes de support (5, 20) au niveau des points d'assemblage.
